# EUROPÄISCHE PATENTSCHRIFT

(11) **EP 1 236 929 B1**
(45) Veröffentlichungstag und Bekanntmachung des Hinweises auf die Patenterteilung: **02.06.2004**
(21) Anmeldenummer: 02004770.0
(22) Anmeldetag: 01.03.2002
(51) Int. Cl.: F16H 1/28, F16H 57/12

(54) **Planetengetriebe**
Planetary gearing
Engrenage planétaire

(30) Priorität: 02.03.2001 DE 10110282
(43) Veröffentlichungstag der Anmeldung: 04.09.2002
(73) Patentinhaber: Maxon-Motor GmbH, 79350 Sexau (DE)
(72) Erfinder: Fütterer, Bodo, 6005 Luzern (CH)
(74) Vertreter: Grünecker, Kinkeldey, Stockmair & Schwanhäusser Anwaltssozietät

(56) Entgegenhaltungen:
- EP-A- 0 779 449
- WO-A-87/06671
- CH-A- 669 020
- DE-A- 3 738 607
- FR-A- 2 584 794
- US-A- 2 802 377
- US-A- 5 429 558
- PATENT ABSTRACTS OF JAPAN vol. 017, no. 056 (M-1362), 4. Februar 1993 (1993-02-04) & JP 04 266646 A (MATSUMURA GIAA SEISAKUSHIYO:KK), 22. September 1992 (1992-09-22)
- PATENT ABSTRACTS OF JAPAN vol. 017, no. 306 (M-1428), 11. Juni 1993 (1993-06-11) & JP 05 026303 A (AISERU KK), 2. Februar 1993 (1993-02-02)

## Beschreibung

Die Erfindung bezieht sich auf ein Planetengetriebe mit einem um eine Drehachse drehbaren Planetenträger, mindestens einem auf dem Planetenträger angeordneten Planetenrad, einem Sonnenrad und einem Hohlrad, wobei das Planetenrad zumindest radial zur Drehachse des Planetenträgers verschieblich angeordnet ist.

Ein solches Planetengetriebe ist in der DE 195 46 586 bzw. der EP 0 779 449 beschrieben. Die radiale Beweglichkeit der Planetenräder gegenüber dem Planetenträger bewirkt bei dem bekannten Planetengetriebe eine erhebliche Steigerung der Lebensdauer, was offensichtlich darauf zurückzuführen ist, dass statische Überbestimmungen vermieden werden. Es hat sich jedoch herausgestellt, dass die Anforderungen an das Planetengetriebe nicht nur derart sind, dass eine höhere Lebensdauer gefordert wird, sondern dass auch in zunehmendem Maße insbesondere für bestimmte Anwendungen eine Spielfreiheit gefordert wird.

Es ist daher Aufgabe der vorliegenden Erfindung, ein Planetengetriebe der eingangs genannten Art möglichst spielfrei zu gestalten.

Hierzu sieht die Erfindung vor, dass das Hohlrad in einer Ebene senkrecht zur Drehachse des Planetenträgers geteilt ausgebildet ist, wobei die beiden Hälften des Hohlrades gegeneinander verdrehbar sind und dadurch zur Spielverminderung eine radiale Verschiebung des Planetenrades in Richtung Sonnenrad bewirken.

Planetengetriebe mit geteilten Hohlrädem sind an sich bereits bekannt. Hierzu wird beispielsweise auf die DE 37 38 607 A1 verwiesen. Das dort dargestellte mehrstufige Planetengetriebe weist neben einem geteilten Hohlrad auch geteilte Planetenräder auf. Durch Verdrehen der Hohlradhälften gegeneinander mittels Stellschrauben werden die beiden Planetenräder gegeneinander verspannt, so dass etwaiges Spiel zwischen Planetenrad und Sonnenrad sowie zwischen Hohlrad und Planetenrädern vermieden wird. Nachteilig hieran ist allerdings, dass in einer Drehrichtung nur eine Hälfte der Zahnflanken des Sonnenrades tragen. Will man daher mit diesem Getriebe die gleichen Leistungen übertragen wie mit einem herkömmlichen Planetengetriebe, so vergrößert sich zwangsläufig die axiale Baulänge des Getriebes. Demgegenüber sieht das Getriebe nach der vorliegenden Erfindung vor, dass lediglich das Hohlrad geteilt ist, nicht aber die Planetenräder. Anstatt dessen sind die Planetenräder radial verschieblich gelagert, so dass durch Verdrehen der Hohlradhälften nicht nur das Spiel zwischen Planetenrad und Hohlrad sondern aufgrund der dadurch bewirkten radialen Verschiebung in Richtung Sonnenrad auch das Spiel zwischen Sonnenrad und Planetenrad vermindert wird. Vorteilhaft dabei ist, dass die Zahnflanken des Sonnenrades über dessen gesamte axiale Länge tragen, so dass trotz Verringerung des Spiels die Baugröße des Planetengetriebes nicht verändert werden muß.

Gemäß einer Ausgestaltung der Erfindung können die beiden Hohlradhälften gegeneinander festlegbar sein. Das kann beispielsweise dadurch geschehen, dass die eine Hohlradhälfte gehäusefest angeordnet ist, während die andere Hohlradhälfte mittels einer Stellschraube gegenüber der feststehenden Hohlradhälfte verdreht werden kann, bis die gewünschte Spielfreiheit erreicht ist.

Eine andere Variante sieht vor, dass die beiden Hohlradhälften in tangentialer Richtung gegeneinander federelastisch verspannt sind. Auch hierzu kann die eine Hohlradhälfte wieder gehäusefest angeordnet sein, während die andere Hohlradhälfte gegenüber der feststehenden Hohlradhälfte verdrehbar angeordnet ist und sich über eine am Gehäuse abstützende Feder abstützt. Die Stärke der Feder wird man je nach Getriebegröße und der zu übertragenden Drehmomente auswählen.

Eine ganz besonders bevorzugte Variante sieht eine Kombination einer federelastischen Vorspannung der beiden Hohlradhälften und deren anschließender relativer Festlegungen vor. Für diese Variante werden die die beiden Hohlradhälften gegeneinander verspannenden Federn nur dafür benötigt, dass sich beispielsweise bei Leerlauf oder sehr geringer Belastung eine Spielfreiheit einstellt. Dann werden die beiden Hohlradhälften, beispielsweise durch eine Verschraubung fest gegeneinander verspannt, so dass die Federn kein Drehmoment übertragen müssen.

Gemäß einer bevorzugten Ausführungsform können die beiden Hohlradhälften über einen Getriebezug derart miteinander verbunden sein, dass eine axiale Bewegung eines Getriebezugelementes eine Verdrehung der beiden Hohlradhälften gegeneinander bewirkt. Ein solcher Getriebezug, der beispielsweise ein Keilgetriebe darstellen kann, hätte den Vorteil, dass von einer Stirnseite des Getriebes her die Spielfreiheit eingestellt werden könnte. Das ist insbesondere dann von Vorteil, wenn im eingebauten Zustand des Getriebes das Spiel nachgestellt werden muß und die radiale Zugänglichkeit des Getriebes nicht gewährleistet ist.

Ein besonders einfacher Getriebezug läßt sich verwirklichen, wenn zumindest eine der beiden Hohlradhälften axial gegenüber der anderen Hohlradhälfte verschiebbar ist. Dann kann nämlich die axialverschiebliche Hohlradhälfte über ein Keilgetriebe mit der axial und tangential festgelegten Hohlradhälfte verbunden sein, so dass eine axiale Verschiebung der beweglichen Hohlradhälfte ein gegeneinander Verdrehen der beiden Hohlradhälften bewirkt.

Insbesondere vorteilhaft ist eine solche Verkoppelung der Hohlradhälften über einen Getriebezug dann, wenn die Getriebezüge der Hohlradhälften mehrere Getriebestufen miteinander verbunden sind. Dann lassen sich nämlich sämtliche Getriebestufen des Planetengetriebes durch eine einzige Betätigung des Getriebezuges spielfrei einstellen.

Eine bevorzugte Ausführungsform der Erfindung sieht vor, dass die beiden Hohlradhälften des Planetengetriebes in axialer Richtung verspannbar sind, wobei die beiden Hohlradhälften in tangentialer Richtung über eine Feder miteinander verbunden sind, die in axialen nicht verspannten Zustand der beiden Hohlradhälften eine gegenseitige Verdrehung der beiden Hohlradhälften bewirkt. Wie bereits oben erwähnt, ist die Stärke der Federn so gewählt, dass nach lösen der Spannschrauben die beiden Hohlradhälften gegeneinander Verdrehen, so dass die Planeten radial verschoben werden, bis ein Spielausgleich erreicht ist. Nach erreichen dieses Spielausgleiches werden die axialen Spannschrauben angezogen, so dass die beiden Hohlradhälften gegeneinander festgelegt sind. In diesem, spielfreien Zustand, übertragen die Federn keine Last. Die Stärke der Federn ist daher nicht auf das durch das Getriebe zu übertragende Drehmoment abzustimmen.

Eine besonders einfach zu realisierende Lösung sieht vor, dass die Hohlradhälften über mindestens eine parallele Drehachse angeordnete, die Hohlradhälften durchdringende Spannschraube miteinander Verbunden sind, wobei in mindestens einer Hohlradhälfte die Bohrung für die Schraube in tangentialer Richtung des Hohlrades Spiel aufweist, derart, dass sich die Hohlradhälfte gegenüber der Schraube tangential bewegen kann. Das bedeutet, dass die Schraube in einer Hohlradhälfte tangential festgelegt ist, währen die andere Hohlradhälfte eine Bohrung mit tangentialen Spiel aufweist, so dass die beiden Hohlradhälften geringfügig gegeneinander verdreht werden können. Da das in dem Getriebe zu beseitigende Spiel in der Regel nicht sehr groß ist, reicht auch ein verhältnismäßig geringer Größenunterschied zwischen Bohrung und Aussendruchmesser der Spannschraube.

Konstruktiv besonders einfach lässt sich die für die Verdrehung der Hohlradhälften gegeneinander vorgesehene Feder anordnen, in dem in der beweglichen Hohlradhälfte eine in die Bohrung mündende Ausnehmung zur Aufnahme einer Druckfeder vorgesehen ist, die sich radial an der Schraube abstützt.

Bei einen mehrstufigen Planetengetriebe ist es günstig, wenn alle Hohlradhälften von der Spannschraube durchdrungen sind.

Insbesondere wenn über das Getriebe höhere Drehmomente zu übertragen sind, ist es ferner von Vorteil, wenn mindestens zwei Spannschrauben die diametral gegenüberliegend angeordnet sind.

Sowohl für eine einfache Montage als auch eine einfache Herstellung des Hohlrades ist es günstig, wenn die Hohlradhälften jeweils Zentrierausnehmungen aufweisen, in die benachbarte Hohlradhälften mit einem Zentrierbund eingreifen. Die einzelnen Hohlradhälften der jeweiligen Stufen lassen sich auf diese Weise turmartig aufeinander setzen, wobei als einziger Freiheitsgrad noch eine Verdrehung der Stufen in tangentialer Richtung übrig bleibt, nämlich der Freiheitsgrad, den man zur Einstellung der Spielfreiheit des Getriebes noch benötigt.

Im folgenden werden Ausführungsbeispiele der Erfindung anhand einer Zeichnung näher erläutert. Es zeigen:
- Fig. 1: in einer perspektivischen schematischen Darstellung ein erfindungsgemäßes Planetengetriebe,
- Fig. 2: das Planetengetriebe aus Fig. 1 in einer schematischen Vorderansicht,
- Fig. 3: in einer schematischen Schnittansicht ein mehrstufiges Planetengetriebe gemäß einer Variante der Erfindung,
- Fig. 4: in einer schematischen Seitenansicht ein Planetengetriebe einer weiteren Ausführungsform;
- Fig. 5: eine Schnittansicht durch die Variante gemäß Fig. 4, und
- Fig. 6: eine Schnittansicht durch das Getriebe gemäß Fig. 5 entlang der Linie VI/IV.

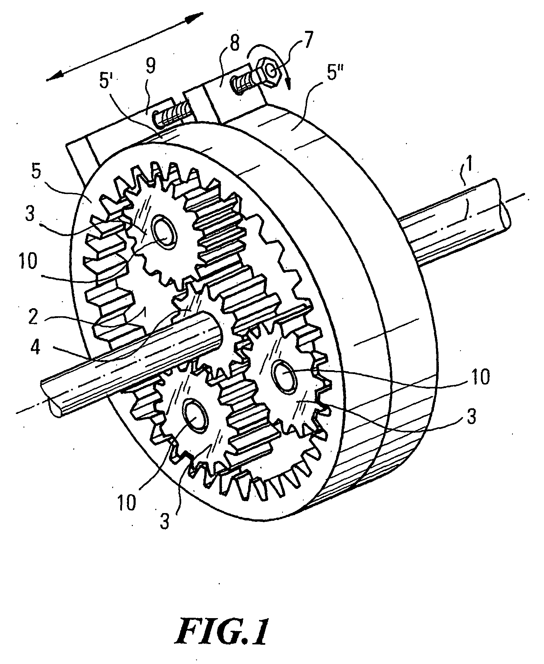

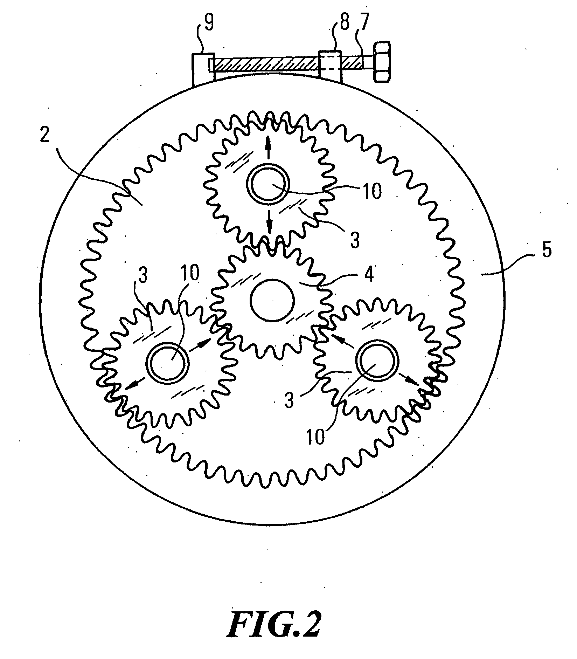

In der Zeichnung ist ein Planetengetriebe mit einem sich um eine Getriebeachse 1 drehenden Planetenträger 2, darauf angeordneten Planetenrädern 3 und einem Sonnenrad 4 dargestellt. Der Planetenträger 2 wird von einem Hohlrad 5 umgeben, dessen Zähne mit den Zähnen der Planetenräder 3 in Eingriff stehen. Das Hohlrad 5 ist in zwei Hälften 5' und 5" unterteilt. Die eine Hälfte 5' ist fest mit dem Gehäuse 6 verbunden, während die andere Hälfte 5" gegenüber der ersten Hälfte verdrehbar ist. Wie aus den Figuren 1 und 2 ersichtlich ist, wird dort die Verdrehbarkeit mittels einer Stellschraube 7 bewirkt, die sich mit ihrem Gewinde einerseits in einem Lagerbock 8 der bewegbaren Hohlradhälfte 5" in Eingriff befindet und die sich mit ihrem Ende an einem Abstützbock 9, der mit der feststehenden Hohlradhälfte 5' verbunden ist, abstützt.

Die Planetenräder 3 sitzen auf Achsstummeln 10 des Planetenträgers 2, und zwar mit einem solchen radialen Spiel, dass die Planetenräder 3 radial zwischen Sonnenrad 4 und Hohlrad 5 beweglich sind. Diese Bewegbarkeit ist insbesondere gut aus Fig. 2 ersichtlich. Um diese Bewegbarkeit zu erreichen, sind die Achsstummeln 10, wie in Fig. 2 dargestellt, vorzugsweise oval ausgebildet, so dass die Planetenräder zwar radiales Spiel aufweisen, nicht jedoch in Umfangsrichtung.

Im folgenden wird die Wirkungsweise der Erfindung näher erläutert.

Durch Drehen der Stellschraube 7 werden die beiden Hohlradhälften 5' und 5" gegeneinander verdreht. Dadurch verringert sich der Abstand der mit den Planetenrädern in Eingriff gehenden Zahnflanken des Hohlrades. Diese Abstandsverringerung führt zum einen dazu, dass das Spiel zwischen den Zähnen der Planetenräder und denen des Hohlrades 5 verringert wird. Sobald dieses Spiel zur Null geworden ist, weil sich die Zahnflanken beidseitig berühren, erzwingt eine weitere Verdrehung der Hohlradhälften 5' und 5" eine Bewegung der Planetenräder 3 radial nach innen in Richtung Sonnenrad 4. Diese radiale Verschiebung bewirkt nun, dass der Zahneingriff zwischen Planetenräder 3 und Sonnenrad 4 stärker wird, bis auch das Spiel zwischen den Planetenrädern 3 und dem Sonnenrad 4 minimiert ist. Sobald dieser Zustand erreicht ist, wird die Stellschraube 7 nicht mehr weiter gedreht, sondern in dieser Stellung fixiert, was beispielsweise mittels einer hier nicht näher dargestellten Kontermutter geschehen kann oder durch andere bekannte Maßnahmen. Das auf diese Weise spielfrei eingestellte Planetengetriebe zeichnet sich dadurch aus, dass zwar die Planetenräder im Zahneingriff zum Hohlrad nur über eine halbe axiale Länge der Zahnflanken tragen, dafür aber mit der vollen axialen Länge zum Sonnenrad 4, wo die höchsten Belastungen auftreten. Diese Art der Spielreduzierung ermöglicht daher die Beibehaltung einer möglichst kleinen Baugröße.

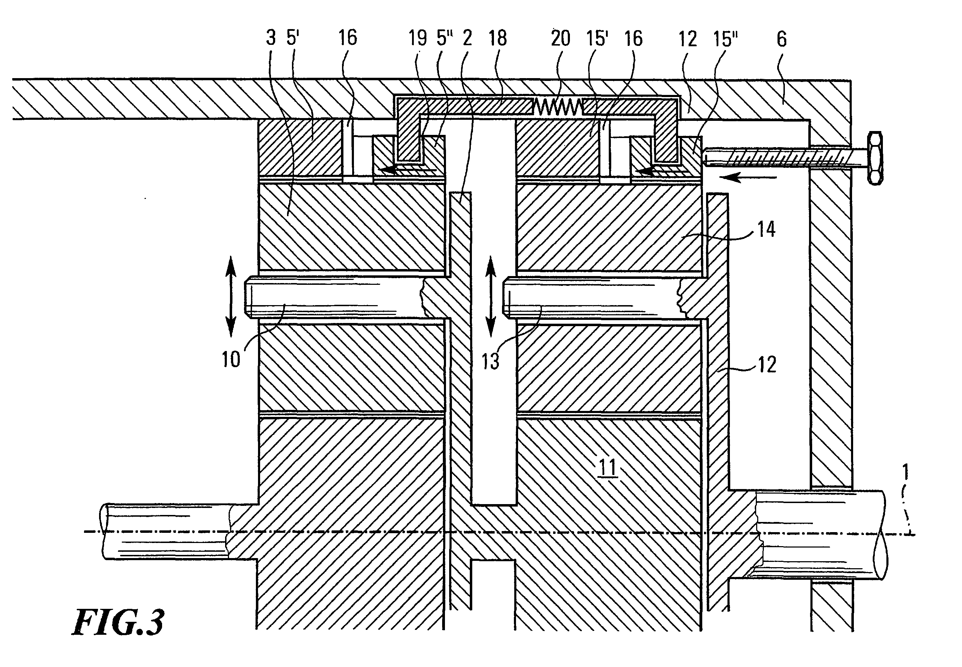

Anhand Fig. 3 wird nun eine weitere Variante des Getriebes beschrieben, und zwar am Beispiel eines mehrstufigen Planetengetriebes. Der Einfachheit halber wird nur auf die Abweichungen gegenüber dem zuvor beschriebenen Ausführungsbeispiel eingegangen.

Die Mehrstufigkeit des Planetengetriebes nach Fig. 3 wird dadurch erreicht, dass der Planetenträger 2 auf seiner Rückseite ein Sonnenrad 11 trägt, welches einstückig mit dem Planetenträger 3 hergestellt ist. Die zweite Stufe weist ferner einen Planetenträger 12 auf, auf dessen Achsstummeln 13 Planetenräder 14 radial verschieblich und drehbar gelagert sind. Die Planetenräder 14 werden von einem Hohlrad 15 umgeben, welches wiederum in zwei Hälften 15' und 15" unterteilt ist.

Die Hohlradhälften 5' und 15' sind fest mit dem Gehäuse 6 verbunden, beispielsweise durch einen Preßsitz oder durch andere, einem Formschluß gewährleistenden Mittel. Die beweglichen Hohlradhälften 5" und 15" sind nicht nur, wie bei dem anderen Ausführungsbeispiel in Umfangsrichtung bewegbar, sondern auch in axialer Richtung, was durch den jeweiligen Pfeil angedeutet ist. Auf den einander zugewandten Stirnflächen weisen die Hohlradhälften 5' (bzw. 15') und 5" (bzw. 15") eine Stirnverzahnung 16 auf. Diese Stirnverzahnung 16 bewirkt, dass die jeweiligen Hohlradhälften 5' und 5" bzw. 15' und 15" gegeneinander verdreht werden, wenn die jeweils axial bewegliche Hälfte 5" bzw. 15" auf die jeweils feststehende Hohlradhälfte 5' bzw. 15' axial bewegt wird. Diese axiale Bewegung der verschiebbaren Hohlradhälfte wird bei dem in Fig. 3 dargestellten Ausführungsbeispiel mittels einer Stellschraube 7 erreicht, die sich mit einem im Gehäuse 6 befindlichen Gewinde in Eingriff befindet. Das vom Schraubenkopf abgewandte Ende stützt sich an der Stirnseite des Hohlrades 15" ab.

Zur gleichmäßigeren Kraftverteilung können über den Umfang des Planetengetriebegehäuses mehrere solcher Stellschrauben 7 vorgesehen sein, die der Einfachheit halber hier aber nicht dargestellt sind.

Auf der Außenseite des Hohlrades 15" befindet sich eine Ausnehmung 17, in welche ein Koppelglied 18 eingreift. Mit seinem anderen Ende greift das Koppelglied 18 in eine Ausnehmung 19 der Hohlradhälfte 5" ein. Das Koppelglied 18 ist im wesentlichen starr, kann jedoch eine Feder 20 aufweisen, die den Ausgleich gewisser Toleranzen ermöglicht.

Im folgenden wird die Wirkungsweise der Variante nach Fig. 3 näher erläutert.

Der Kraftschluß des Getriebes erfolgt in bekannter Weise. Die hier nicht dargestellte Eingangswelle treibt das Sonnenrad 4 an, dieses wiederum die Planetenträger 3, die sich am Hohlrad 5 abwälzen und somit den Planetenträger 2 in Drehung versetzen, woraufhin in der zweiten Stufe das Sonnenrad 11, die Planetenträger 14, und letztlich der Planetenträger 12 angetrieben werden, wobei letzterer mit der Ausgangswelle verbunden ist. Um das Spiel zwischen den Komponenten Hohlrad, Planetenräder und Sonnenrad zu beseitigen, werden die Hohlradhälften 5', 5" und 15', 15", wie bei dem zuvor beschriebenen Ausführungsbeispiel wieder gegeneinander verdreht. Diese Verdrehung geschieht nun derart, dass die Stellschraube 7 in das Gehäuse eingedreht wird. Dadurch, dass sich die Stellschraube 7 auf der Stirnseite des Hohlrades 15 abstützt, wird das die Hohlradhälfte 15" axial nach links verschoben. In diesem Zustand liegen die Zahnflanken der Stirnverzahnungen 16 der jeweiligen Hohlradhälften 5' und 5" bzw. 15' und 15" aneinander an. Die axiale Verschiebung der Hohlradhälfte 15" bewirkt daher, dass sich die Hohlradhälfte 15" nicht nur axial bewegt, sondern dabei auch in Umfangsrichtung gegenüber der Hohlradhälfte 15' verdreht. Gleichzeitig wird die axiale Bewegung der Hohlradhälfte 15" über das Koppelglied 18 auf die Hohlradhälfte 5" übertragen. Damit wird auch die Hohlradhälfte 5" axial bewegt und, aufgrund der Stirnverzahnung 16 in Umfangsrichtung gegenüber der Hohlradhälfte 5' verdreht. Auf diese Weise läßt sich mit einer Betätigung das Spiel in jeder Stufe des mehrstufigen Planetengetriebes minimieren. Da man nicht davon ausgehen kann, dass das Spiel in jeder Stufe gleich ist, kann, wie in Fig. 3 dargestellt, im Koppelglied 18 eine Feder 20 vorgesehen sein, die Überbeanspruchungen ausgleicht. Eine solche Feder könnte auch in die Stellschraube 7 selbst integriert sein, um einem gewissen Verschleiß der Zahnflanken Rechnung zu tragen.

Obgleich hier nicht dargestellt, könnte das mehrstufige Getriebe auch weitere Stufen umfassen, die in ähnlicher Weise miteinander gekoppelt sind.

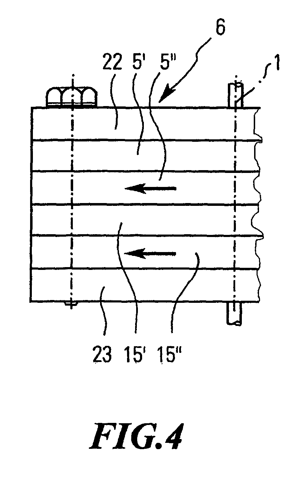

Die Figuren 4 bis 6 zeigen ein weiteres Ausführungsbeispiel der Erfindung, der bei dem im wesentlichen nur im folgenden nur die Unterschiede zu dem vorherigen Ausführungsbeispiel beschrieben werden. Soweit wie möglich werden für die selben Bauteile auch die gleichen Bezugsziffern verwendet.

Der prinzipielle Unterschied zu den zuvor beschriebenen Ausführungsbeispiel besteht darin, dass die einzelnen Hohlradhälften 5', 5" mit Hilfe einer Feder 20 gegeneinander verdreht werden, dann aber mit einer Spannschraube 21 axial miteinander verspannt werden.

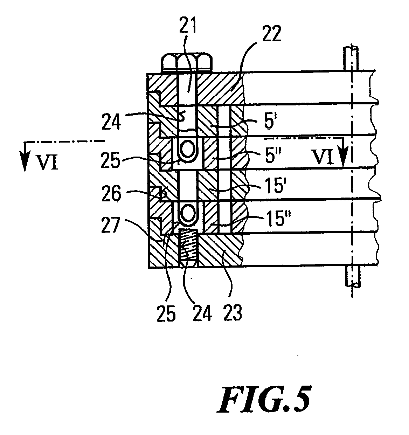

Der Aufbau dieser Anordnung ist besonders gut in Figur 5 dargestellt. Dort sind zwei Hohlräder 5 und 15 vorgesehen, jeweils mit Hohlradhälften 5' und 5" bzw. 15' und 15".

Stimseitig werden die beiden Hohlräder 5 und 15 durch Deckel 22 und 23 abgedeckt. Sowohl die Deckel als auch die Hohlräder 5 und 15 sind durch Axialbohrung durchsetzt. Die Bohrungen 24 in den Hohlradhälften 5' und 15' sowie den Deckeln 22 und 23 entsprechen im wesentlichen fast genau den Durchmesser der Spannschraube 21, wobei in dem Deckel 23 auch ein Gewinde vorgesehen ist. Die Bohrungen 25 in den Hohlradhälften 5" und 15" sind hingegen im Durchmesser größer gewählt, so dass diese beiden Hohlradhälften auch bei eingeschraubter Spannschraube, sofern diese nicht festgezogen ist, gegenüber den übrigen Hohlradhälften 5' und 15' verdrehbar sind.

Ferner ist aus der Fig. 5 gut zu erkennen, dass sowohl die Deckel 22 und 23 als auch die Hohlradhälften 5' bis 15" jeweils eine Zentrierausnehmung 26 und ein Zentrierbund 27 aufweisen, wobei jeweils der Zentrierbund der einen Hohlradhälfte mit der Zentrierausnehmung der anderen Hohlradhälfte zusammenpasst.

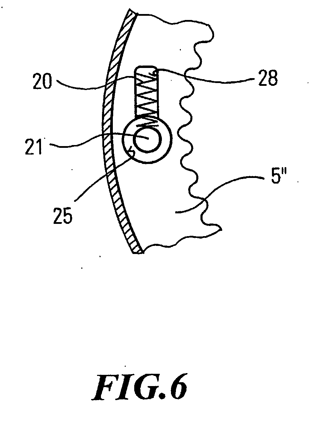

Aus Fig. 6 ist erkennbar, dass in tangentialer Ausrichtung zur Hohlradhälfte 5" eine radiale in die Bohrung 25 mündende Ausnehmung 28 vorgesehen ist, in welche die Feder 20, die hier als Druckfeder ausgebildet ist, eingelegt werden kann. Fig. 6 zeigt, dass sich die Feder 20 einerseits am Grund der Ausnehmung 28 und andererseits radial an der Spannschraube 21 abstützt.

Die Wirkungsweise der Ausführungsform gemäß der Fig. 4 bis 6 wird im folgenden näher beschrieben.

Zunächst wird das gesamte Hohlrad des Planetengetriebe so zusammengebaut, dass sämtliche Zähne der einzelnen Hohlradhälften miteinander fluchten. Nach Einbau der einzelnen Planetenträger und Planeten, also nach kompletter Montage des Planetengetriebes, werden die Spannschrauben 21 gelöst, so dass die Fedem 20 die jeweiligen Hohlradhälften 5" und 15" gegenüber den festen Hohlradhälften 5' und 15' verdrehen können. Diese Verdrehen bewirkt, wie auch bereits bei den vorbeschriebenen Ausführungsbeispielen, dass sich die Planeten radial nach innen bewegen, so dass das Spiel zwischen den Planeten und den Sonnenrad einerseits und auch den Hohlrad und den Planeten andererseits minimiert wird. Dieser Spielausgleich kann dadurch unterstützt werden, dass bei gelösten Spannschrauben die Getriebewelle gedreht wird. Nachdem sich das Spiel aufgrund der Wirkung der Druckfedern 20 minimiert hat, werden die Spannschrauben 21 wieder angezogen, so dass nunmehr die Hohlradhälften 5', 5" und 15' bzw. 15" fest gegeneinander positioniert sind. Das Getriebe ist nunmehr spielfrei eingestellt. Sollte sich aufgrund des Verschleißes des Getriebes bei Gebrauch wieder ein Spiel einstellen, so kann dieses verschleißbedingte Spiel auf die gleiche Art und Weise eliminiert werden, wie oben beschrieben, in dem nämlich die Spannschrauben kurzfristig gelöst und dann wieder angezogen werden.

## Patentansprüche

1. Planetengetriebe mit einem um eine Drehachse (1) drehbaren Planetenträger (2), mindestens einem auf dem Planetenträger (2) angeordneten Planetenrad (3), einem Sonnenrad (4) und einem Hohlrad (5), wobei das Planetenrad (3) zumindest radial zur Drehachse (1) des Planetenträgers (2) verschieblich angeordnet ist, **dadurch gekennzeichnet, dass** das Hohlrad (5) in einer Ebene senkrecht zur Drehachse (1) des Planetenträgers (2) geteilt ausgebildet ist, wobei die beiden Hälften (5', 5") des Hohlrades (5') gegeneinander verdrehbar sind und dadurch zur Spielverminderung eine radiale Verschiebung des Planetenrades (3) in Richtung Sonnenrad (4) bewirken.

2. Planetengetriebe nach Anspruch 1, **dadurch gekennzeichnet, dass** die beiden Hohlradhälften (5', 5") gegeneinander festlegbar sind.

3. Planetengetriebe nach Anspruch 1 oder 2, **dadurch gekennzeichnet, dass** die beiden Hohlradhälften (5', 5") in tangentialer Richtung gegeneinander federelastisch (Feder 20) verspannt sind.

4. Planetengetriebe nach einem der Ansprüche 1 bis 3, **dadurch gekennzeichnet, dass** die beiden Hohlradhälften (5', 5") über einen Getriebezug (5', 16, 5") derart miteinander verbunden sind, dass eine axiale Bewegung eines Getriebezugelementes (5") eine Verdrehung der beiden Hohlradhälften (5', 5") gegeneinander bewirkt.

5. Planetengetriebe nach Anspruch 4, **dadurch gekennzeichnet, dass** zumindest eine der beiden Hohlradhälften (5") axial gegenüber der anderen Hohlradhälfte (5') axial verschiebbar ist.

6. Planetengetriebe nach Anspruch 4 oder 5, **dadurch gekennzeichnet, dass** das Planetengetriebe mehrstufig ausgebildet ist und dass die Getriebezüge der Hohlradhälften (5', 5"; 15', 15") mehrerer Getriebestufen miteinander verbunden sind, z.B. über ein Koppelglied 18.

7. Planetengetriebe nach einem der Ansprüche 1 bis 6, **dadurch gekennzeichnet, dass** die beiden Hohlradhälften (5', 5"; 15', 15") in axialer Richtung verspannbar sind, wobei die beiden Hohlradhälften in tangentialer Richtung über eine Feder (20) miteinander verbunden sind, die in axialen nicht verspannten Zustand der beiden Hohlradhälften eine Verdrehung der beiden Hohlradhälften (5', 5"; 15', 15") bewirkt.

8. Planetengetriebe nach einem der Ansprüche 1 bis 7, **dadurch gekennzeichnet, dass** die Hohlradhälften (5', 5"; 15', 15") über mindestens eine parallel zu der Drehachse (1) angeordnete, die Hohlradhälften (5', 5"; 15', 15") axial durchdringende Spannschraube (21) miteinander verbunden sind, wobei in mindestens einer Hohlradhälfte (5", 15") die Bohrung (25) für die Schraube (21) in tangentialer Richtung des Hohlrades (5, 15) Spiel aufweist, derart, dass sich die Hohlradhälften (5', 5"; 15', 15") gegenüber der Spannschraube (21) tangential bewegen können.

9. Planetengetriebe nach einem der Ansprüche 1 bis 8, **dadurch gekennzeichnet, dass** in beweglichen Hohlradhälften (5", 15") eine in die Bohrung (25) mündende Ausnehmung (19) zur Aufnahme eine Druckfeder (20) vorgesehen ist, die sich radial an der Schraube (21) abstützt.

10. Planetengetriebe nach einem der Ansprüche 1 bis 9, **dadurch gekennzeichnet, dass** das Planetengetriebe mehrstufig ausgebildet ist und alle Hohlradhälften (5', 5"; 15', 15") von der Spannschraube (21) durchdrungen sind.

11. Planetengetriebe nach einem der Ansprüche 1 bis 10, **dadurch gekennzeichnet, dass** zwei Spannschrauben (21) diametral gegenüberliegend angeordnet sind.

12. Planetengetriebe nach einem der Ansprüche 1 bis 11, **dadurch gekennzeichnet, dass** die beiden Hohlradhälften (5', 5"; 15', 15") jeweils Zentrierausnehmungen (26) aufweisen, in die benachbarte Hohlradhälften (5', 5"; 15', 15") mit einem Zentrierbund (27) eingreifen.

## Claims

1. A planet gear comprising a planet carrier (2) rotatable around an axis of rotation (1), at least one planet wheel (3) arranged on the planet carrier (2), a sun wheel (4) and a ring gear (5), wherein the planet wheel (3) is arranged movably at least radial with respect to the axis of rotation (1) of the planet carrier (2), **characterized in that** the ring gear (5) is divided in two on a plane perpendicular to the axis of rotation (1) of the planet carrier (2), wherein the two halves (5, 5") of the ring gear (5') can be rotated against each other and effect a radial shift of the planet wheel (3) in the direction towards the sun wheel (4) to reduce backlash.

2. A planet gear as claimed in claim 1, **characterized in that** the two halves (5', 5") of the ring gear can be fixed against each other.

3. A planet gear as claimed in claim 1 or 2, **characterized in that** the two halves (5', 5") of the ring gear are positioned against each other in a spring-elastic manner (spring 20) in the tangential direction.

4. A planet gear as claimed in one of claims 1 to 3, **characterized in that** the two halves (5', 5") of the ring gear are connected to one another through a train of gears (5', 16, 5") in a manner that an axial movement of an element (5") of the train of gears effects a rotation of the two halves (5', 5") of the ring gear against each other.

5. A planet gear as claimed in claim 4, **characterized in that** at least one of the halves (5") of the ring gear is axially movable against the other half (5') of the ring gear.

6. A planet gear as claimed in claim 4 or 5, **characterized in that** the planet gear is formed with multiple steps and that the trains of gear of the halves (5', 5"; 15', 15") of the ring gears of several gear steps are connected to one another e.g. via a coupling element 18.

7. A planet gear as claimed in one of claims 1 to 6, **characterized in that** the two halves (5', 5"; 15', 15") of the ring gears can be positioned in the axial direction, wherein the two halves of the ring gear are connected to one another in the tangential direction via a spring (20), which effects in the axially non-positioned condition of the two halves of the ring gear a rotation of the two halves (5', 5"; 15', 15") of the ring gear.

8. A planet gear as claimed in one of claims 1 to 7, **characterized in that** the halves (5', 5"; 15', 15") of the ring gears are connected to one another through at least one fastening screw (21) arranged in parallel to the axis of rotation (1)) and axially penetrating the halves (5', 5"; 15', 15") of the ring gear, wherein in at least one half (5", 15") of the ring gear the bore (25) for the screw (21) has backlash in the tangential direction of the ring gear (5, 15), in a manner that the halves (5', 5"; 15', 15") of the ring gear may move tangentially with respect to the fastening screw (21).

9. A planet gear as claimed in one of claims 1 to 8, **characterized in that** a recess (19) opening into the bore (25) for accommodating a pressure spring (20) is provided in the movable halves (5", 15") of the ring gear, said pressure spring being radially supported at the screw (21).

10. A planet gear as claimed in one of claims 1 to 9, **characterized in that** the planet gear is formed of multiple steps and all halves (5', 5"; 15', 15") of the ring gear are penetrated by the fastening screw (21).

11. A planet gear as claimed in one of claims 1 to 10, **characterized in that** two fastening screws (21) are arranged diametrally opposite.

12. A planet gear as claimed in one of claims 1 to 11, **characterized in that** the two halves (5', 5"; 15', 15") of the ring gear each have centering recesses (26) into which adjoining halves (5, 5"; 15', 15") of the ring gear with a centering collar (27) engage.

## Revendications

1. Engrenage planétaire avec un porte-satellites (2) apte à tourner sur un axe de rotation (1), au moins une roue satellite (3) disposée sur ledit porte-satellites (2), un planétaire (4) et une couronne de train planétaire (5), la roue satellite (3) étant mobile au moins radialement par rapport à l'axe de rotation (1) du porte-satellites (2), **caractérisé en ce que** la couronne (5) est divisée dans un plan perpendiculaire à l'axe de rotation (1) du porte-satellites (2), les deux moitiés (5', 5") de la couronne (5') pouvant tourner l'une par rapport à l'autre et provoquant ainsi, pour réduire le jeu, un déplacement radial de la roue-satellite (3) en direction du planétaire (4).

2. Engrenage planétaire selon la revendication 1, **caractérisé en ce que** les deux moitiés de couronne (5', 5") sont aptes à être bloquées l'une par rapport à l'autre.

3. Engrenage planétaire selon la revendication 1 ou 2, **caractérisé en ce que** les deux moitiés de couronne (5', 5") sont serrées l'une par rapport à l'autre de manière élastique (ressort 20) dans le sens tangentiel.

4. Engrenage planétaire selon l'une des revendications 1 à 3, **caractérisé en ce que** les deux moitiés de couronne (5', 5") sont reliées entre elles par un train d'engrenages (5', 16, 5") de telle sorte qu'un mouvement axial d'un élément de train d'engrenages (5") provoque une rotation des deux moitiés de couronne (5', 5") l'une par rapport à l'autre.

5. Engrenage planétaire selon la revendication 4 ou 5, **caractérisé en ce que** l'une au moins des deux moitiés de couronne (5") est mobile axialement par rapport à l'autre moitié (5') .

6. Engrenage planétaire selon la revendication 4 ou 5, **caractérisé en ce qu'**il a plusieurs étages et **en ce que** les trains d'engrenages des moitiés de couronne (5', 5", 15', 15") de plusieurs étages d'engrenage sont reliés entre eux, par exemple grâce à un élément d'accouplement (18).

7. Engrenage planétaire selon l'une des revendications 1 à 6, **caractérisé en ce que** les deux moitiés de couronne (5', 5", 15', 15") sont aptes à être serrées dans le sens axial, étant précisé qu'elles sont reliées entre elles dans le sens tangentiel grâce à un ressort (20) qui provoque, dans la position non serrée axialement des deux moitiés de couronne (5', 5", 15', 15"), une rotation de celles-ci.

8. Engrenage planétaire selon l'une des revendications 1 à 7, **caractérisé en ce que** les moitiés de couronne (5', 5", 15', 15") sont reliées entre elles grâce à au moins une vis de serrage (21) qui est parallèle à l'axe de rotation (1) et qui traverse axialement lesdites moitiés de couronne (5', 5", 15', 15"), étant précisé que dans l'une au moins des moitiés de couronne (5", 15"), le perçage (25) pour la vis (21) présente du jeu dans le sens tangentiel de la moitié de couronne, de telle sorte que lesdites moitiés (5', 5", 15', 15") peuvent être déplacées tangentiellement par rapport à la vis de serrage (21).

9. Engrenage planétaire selon l'une des revendications 1 à 8, **caractérisé en ce qu'**il est prévu dans les moitiés de couronne mobiles (5", 15") un creux (19) qui débouche dans le perçage (25) et qui est destiné à recevoir un ressort de pression (20) qui s'appuie radialement contre la vis (21).

10. Engrenage planétaire selon l'une des revendications 1 à 9, **caractérisé en ce qu'**il a plusieurs étages et toutes les moitiés de couronne (5', 5", 15', 15") sont traversées par la vis de serrage (21).

11. Engrenage planétaire selon l'une des revendications 1 à 10, **caractérisée en ce qu'**il est prévu deux vis de serrage (21) diamétralement opposées.

12. Engrenage planétaire selon l'une des revendications 1 à 11, **caractérisé en ce que** les deux moitiés de couronne (5', 5", 15', 15") présentent chacune un creux de centrage (26) dans lequel la moitié (5', 5", 15', 15") voisine pénètre avec une collerette de centrage (27).
